# EUROPEAN PATENT APPLICATION

(11) **EP 2 595 265 A1**
(43) Date of publication of application: **22.05.2013**
(21) Application number: 11189595.9
(22) Date of filing: 17.11.2011
(51) Int. Cl.: H02J 3/00, H02J 4/00, B63H 23/24

(54) **Power supply system of a marine vessel**

(71) Applicant: Siemens Aktiengesellschaft, 80333 München (DE)
(72) Inventor: Radan, Damir, 4317 Sandnes (NO)

(57) **Abstract**

A power supply system of a marine vessel is provided. The power supply system is adapted to be coupled to a power distribution bus of a marine vessel for powering a plurality of electric motors coupled to the power distribution bus. The power supply system includes a generator for generating electric power and a control system coupled to the generator and adapted to control the output voltage of the generator in accordance with a voltage setpoint. The control system includes a measuring unit for measuring a parameter of the electric power generated by the generator and the control unit adapted to control the voltage setpoint for the output voltage of the generator in dependence on the measured parameter.

## Description

### FIELD OF THE INVENTION

The invention relates to a power supply system of a marine vessel and to a power system of such vessel. It further relates to a method of operating a power supply system of a marine vessel.

### BACKGROUND OF THE INVENTION

Marine vessels, such as offshore platforms, drilling or production vessels often comprise independent power systems which have a generator coupled to a source of mechanical energy, such as a diesel engine or a gas turbine. Electric power produced by the generator is distributed over a power distribution bus to which a plurality of consumers are connected. Large consumers comprise thruster drives, a drilling drive or drawworks, while smaller consumers may be pumps, compressors, and other electric devices provided on such vessel.

Unlike onshore power systems which generally derive the electric energy from a plurality of sources, the isolated power systems of marine vessels have a relatively low number of generators installed, typically 4 to 6. Due to the short cable routes, the use of bus bars and no transformers in the path, the impedances between the generators are generally rather low, almost insignificant. If there is a fault in the power system, such as a bus bar fault or a generator interconnection cable fault, a relatively high voltage dip occurs due to the low impedances. Electric motors connected to the power system will thus generally operate under a significantly reduced current supply and will consequently slow down. As an example, the power system of the marine vessel may have tens or hundreds of small electric motors connected, for example direct online (DOL) induction motors.

After the fault is cleared, the electric motors will increase their speed back to nominal, which will result in a significant inrush current. In some systems, an automatic voltage regulator (AVR) will control the generator and thus the voltage on the main power distribution bus. During the system recovery after the fault, a voltage overshoot will generally occur as the AVR will try to compensate for the voltage drop, the overshooting being typically higher than 150 %. If the marine vessel is in transit, it will generally operate in a DP2 mode (i.e. according to dynamic positioning 2 specifications of Det Norske Veritas (DNV)). In this mode of operation, the voltage overshot is generally not considered to be a problem. If the overshoot should lead to a blackout of another component, the component may be isolated from the system and repaired, which is generally not critical under DP2 operation. On the other hand, if the vessel operates in a DP3 mode, e.g. when performing a drilling operation, the bus tie breakers of the power distribution bus are open, so that the power system of the marine vessel is essentially split into several independent power systems. As an example, 2, 3 or 4 sections of the power distribution bus can be provided, each of which operates as an independent redundant power system. If there is a fault in one of these subsystems, the other subsystems will not be affected since they are electrically isolated from the faulty subsystem. Thus, a voltage overshoot which may occur after resuming operation of a faulty subsystem will not be experienced by the remaining subsystems.

Although operating the power system with open bus tie breakers provides redundancy and avoids a complete blackout in case of a fault in a component, it has the disadvantage that in each subsection, a generator needs to be operated and the operation of the generators is generally rather ineffective, since some generators may operate at their maximum capacity while other generators may only operate close to idle. Accordingly, it is desirable to operate the power system with closed bus tie breakers while at the same time ensuring a fault resistant operation in which the requirements according to the DP3 specifications are met. In particular, it is desirable to ensure that a fault in one component does not affect the operation of the remaining components, e.g. generators and drives, of the remaining sections of the power system.

### SUMMARY

Accordingly, there is the need for an improved power supply system for a marine vessel, which mitigates at least some of the drawbacks mentioned above.

This need is met by the features of the independent claims. The dependent claims describe embodiments of the invention.

An embodiment provides a power supply system of a marine vessel, the power supply system being adapted to be coupled to a power distribution bus of the marine vessel for powering a plurality of electric motors coupled to the power distribution bus. The power supply system comprises a generator for generating electric power, the generating providing, in operation, an output voltage at an output of the generator, the output voltage being an alternating current (AC) voltage. The power supply system further comprises a control system coupled to the generator and adapted to control the output voltage of the generator in accordance with a voltage setpoint, which, in operation, is set to an operating voltage setpoint. The control system comprises a measuring unit adapted to measure a parameter of the electric power generated by the generator, wherein the parameter is capable of indicating a fault in a component coupled to the power supply system, which fault results in a drop of voltage on the generator output. The parameter that is measured may for example be the output voltage at the generator output or an AC frequency of the output voltage. The control system further comprises a control unit adapted to control the voltage setpoint for the output voltage of the generator in dependence on the measured parameter such that if the value of the parameter falls below a threshold, the voltage setpoint is reduced. The control unit is further adapted to gradually increase the voltage setpoint back to the operating voltage setpoint after the fault is electrically isolated from the power supply system.

By lowering the voltage setpoint after a fault and bringing it gradually back to normal, a voltage overshoot can be kept within acceptable limits or can even be prevented. By limiting the voltage overshoot, the tripping of and/or the damage to other electrical components coupled to the power distribution bus of the marine vessel may be prevented. A reliable operation can thus be ensured even if the bus tie breakers are closed and a fault occurs in the power system. Operation of the power system according to DP3 specifications with closed bus tie breakers may thus be achieved.

That the fault is electrically isolated from the power supply system means that the fault is cleared, which may e.g. occur by disconnecting the component having the fault from the power supply system e.g. by disconnecting it from the power distribution bus, or by disconnecting a section of the power distribution bus in which the fault occurred from the remaining sections of the power distribution bus, or by simply removing the cause of the fault if possible. The disconnecting may occur by means of circuit breakers, bus tie breakers, relays, fuses, power electronics or the like.

In an embodiment, the control systems may determine that a fault occurred, e.g. when the measured parameter falls below the threshold, and may then control the voltage setpoint as described above. It is also possible that the occurrence of a fault is not explicitly determined, but that the control unit simply controls the voltage setpoint in dependence on the measured parameter, e.g. in accordance with a predefined relationship. A fault may for example be a short circuit in a component coupled to the power distribution bus or in the power distribution bus itself, e.g. a bus bar fault, or a generator interconnection cable fault, or the like. Such fault generally leads to a drop of the voltage on the generator output after the occurrence of the fault. The operating voltage setpoint defines a voltage which the generator should deliver at its normal operation. As such, the operating voltage setpoint may be varied as required during normal operation (i.e. operation without the presence of a fault).

In an embodiment, the gradual increase of the voltage setpoint is performed such that a voltage overshoot occurring after the return of the voltage setpoint to the operating voltage setpoint is less than 125%, preferably less than 120% of the operating voltage. By such configuration of the control system, it can be ensured that the DP3 specifications for operating the power system can be achieved.

In an embodiment, the parameter is the voltage at the generator output and the control unit is adapted to determine that a fault in the power supply system or in components coupled thereto exists if the voltage at the generator output drops below a voltage threshold. Due to the low impedances in the power system of a marine vessel, a fault of a component, in particular a short circuit will result in a considerable voltage drop, so that measuring the voltage at the output of the generator is a good indicator for the occurance of a fault.

In another embodiment, the parameter is the AC frequency of the output voltage at the generator output and the control unit is adapted to determine that a fault in the power supply system or in components coupled thereto exists if the AC frequency at the generator output drops below a frequency threshold. A fault, such as a short circuit in one of the components, will generally lead to a large current being drawn from the generator of the power supply system, and accordingly, the load on the generator will increase. This can result in a reduction of the shaft rotation speed of the generator and thus in the frequency of the output voltage. The AC frequency at the generator output is thus a good indicator for the occurrence of a fault in the power system.

In an embodiment, the control unit is adapted to set the voltage setpoint to a starting voltage setpoint after the detection of the fault and to ramp the voltage setpoint up to the operating voltage setpoint thereafter. By using a ramp to increase the voltage setpoint after a fault, the voltage overshoot can be kept low. The starting voltage setpoints may for example lie in a range of 0 % to 50 % of the operating voltage setpoint.

The ramping of the voltage setpoint from the starting voltage setpoint to the operating voltage setpoint may occur within a time period selected from a range of about 0.1 seconds to about 3 seconds, and preferably from a range from about 0.5 seconds to about 2 seconds.

By such starting voltage setpoint, the current inrush to the electric motors connected to the power distribution bus may be reduced significantly. By making use of such ramp, the tripping of consumers (i.e. the self initiated shut down of consumers) due to a too low voltage may be prevented. In particular, by making the duration of the ramp less than 3, preferably less than 2 seconds, a tripping of frequency converters of the thrusters drives due to the low voltage may be prevented, which may occur when a kinetic energy recovery is no longer possible if to the voltage is reduced for a too long duration.

As an example, two ramps may be used, with a first ramp starting at the starting voltage setpoint and extending to an intermediate voltage setpoint, and a second ramp starting at the intermediate voltage setpoint and extending to the operating voltage setpoint. The intermediate voltage setpoint may for example lie within a range of about 70 % to about 90 %, preferably about 75 % to about 85 % of the operating voltage setpoint. A fast recovery back to the normal operating voltage may thus be achieved while at the same time minimizing voltage overshoot.

In an embodiment, the control unit comprises a protection controller and an automatic voltage regulator (AVR), wherein the protection controller has an interface to the AVR and is adapted to generate a control signal for controlling the voltage setpoint, and is further adapted to supply the control signal to the AVR via the interface. The ACR is adapted to determine the voltage setpoint from the supplied control signal and to control a field voltage of the generator in accordance with the determined voltage setpoint. As an example, the AVR may have an input that is commonly used for a power system stabilizer, and this input may now be used by the protection controller for controlling the voltage setpoint as outlined above. The input may for example be an analogue voltage or current input. The protection controller may for example provide a control signal which ramps up the voltage setpoint as described above, thereby minimizing voltage overshoot.

In an embodiment, the control unit comprises an automatic voltage regulator (AVR), and the automatic voltage regulator comprises a Volts per Hertz limiter, which limits the voltage setpoint in dependence on the AC frequency of the output voltage of the generator such that a lower AC frequency results in a lower limit for the voltage setpoint. Thus, if the AC frequency drops due to the occurrence of the fault, the Volts per Hertz limiter will consequently reduce the voltage setpoint and will gradually increase the voltage setpoint after the fault is cleared. Excessive inrush currents and voltage overshoot can thus be prevented.

The Volts per Hertz limiter may in particular be configured such that the ratio of the voltage setpoint to the AC frequency remains below a predefined limit. If this limit is exceeded, the Volts per Hertz limiter reduces the voltage setpoint. As an example, at the nominal AC frequency, the maximum voltage setpoint may be limited to between 105 % and 120 %, preferably about 110 % of the operating voltage setpoint. This limitation defines a maximum ratio of the voltage setpoint to the AC frequency (e.g. a ratio of 1.1). The Volts per Hertz limiter can be configured to limit the voltage setpoint such that this maximum ratio is not exceeded for all AC frequencies. Thus, if the AC frequency drops to 50 % of the nominal AC frequency, the voltage setpoint may be limited to a maximum of 55 % of the operating voltage setpoint.

In an embodiment, the AVR may be coupled to the protection controller and may comprise the Volts per Hertz limiter (i.e. it may combine the two above mentioned embodiments). The AVR may be adapted to control the voltage setpoint in accordance with the supplied control signal and at the same time to limit the voltage setpoint in dependence on the AC frequency of the output voltage of the generator by means of the Volts per Hertz limiter. A double protection against voltage overshoot may thus be achieved. As an example, if the protection controller may fail, the Volts per Hertz limiter will still reduce voltage overshoot to an acceptable level.

Another embodiment of the invention provides a power system of a marine vessel, in particular of an offshore platform or a drilling or production vessel. The power system comprises plural power supply systems in any of the above mentioned configurations, and a power distribution bus divided into several sections, each section being coupled to at least one power supply system. The sections are connectable by bus tie breakers, and the power distribution bus is adapted to supply electric power generated by the power supply systems to a plurality of electric motors coupled to the power distribution bus. By making use of the power supply systems as described above, a voltage overshoot can be prevented after a section of the power distribution bus is disconnected and the system is again powered up.

In an embodiment, each of the power supply systems is adapted to limit a voltage overshoot occurring after a fault in one of the power supply systems, the distribution bus or components coupled thereto to less than 125 %, preferably less than 120 % of the nominal operating voltage of the respective power supply system. The limitation occurs by the above mentioned gradual increase of the voltage setpoint after electrically isolating the fault from the power supply systems.

The power system may be adapted to open, after the detection of the fault, the bus tie breakers of the section of the power distribution bus in which the fault occurred, thereby isolating the fault from the power supply systems coupled to the remaining sections of the power distribution bus. By the above mentioned means, remaining power supply systems may return to normal operation without causing excessive voltage overshoot.

The sections of the power distribution bus may be connected in a ring configuration. Even if a section is disconnected from the power distribution bus, the remaining sections thus stay connected with each other. By means of the ring configuration with closed bus tie breakers, only as many generators as required need to go online i.e. deliver power to the power distribution bus. Further, when operating several generators, load can be shared between these, so that the generators can operate in efficient operating ranges, even if the generators are connected to different bus sections.

The power system may be adapted to operate according to DP3 specifications (e.g. in a DP3 mode of operation), with the bus tie breakers being closed between the sections of the power distribution bus. By making use of the power supply systems configured as outlined above, the voltage overshoot can be reduced to levels that enable a DP3 operation with closed bus tie breakers.

A further embodiment of the invention provides a method of operating a power supply system of a marine vessel. The power supply system is coupled to a power distribution bus of the marine vessel for powering a plurality of electric motors coupled to the power distribution bus. The power supply system comprises a generator and a control system adapted to control the output voltage of the generator in accordance with a voltage setpoint. The method comprises operating the power supply system with the voltage setpoint set to an operating voltage setpoint; measuring a parameter of the electric power generated by the generator, wherein the parameter is capable of indicating a fault in a component coupled to the power supply system which results in a drop of voltage on the generator output. The method further comprises reducing the voltage setpoint for the output voltage of the generator if the value of the parameter falls below a threshold, and, after the fault is electrically isolated from the power supply system, gradually increasing the voltage set point back to the operating voltage set point. By the method, advantages similar to those outlined further above with respect to the power supply system may be achieved.

In an embodiment of the method, the method further comprises detecting a fault in a component coupled to the power supply system by detecting a drop in the output voltage of the generator below a voltage threshold or by detecting a drop in the AC frequency of the output voltage of the generator below a frequency threshold. It may further comprise isolating the fault by opening bus tie breakers of a section of the power distribution bus in which the fault occurred, whereby the fault is electrically isolated from the power supply system. Electrically isolating the fault may also occur by disconnecting the component which causes the fault from the power distribution bus, e.g. by means of a corresponding circuit breaker, relay or the like.

Embodiments of the method may be carried out on the power supply system in any of the above described configurations. In particular, any method steps described above with respect to embodiments of the power supply system may be implemented in the method of operating a power supply system of a marine vessel.

The features of the embodiments of the invention mentioned above and those yet to be explained below can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Figure 1 is a schematic block diagram illustrating a power supply system in accordance with an embodiment of the invention.
Figure 2 is a schematic block diagram illustrating a possible configuration of the power supply system of figure 1.
Figure 3 is a schematic block diagram illustrating a power system according to an embodiment of the invention which can comprise the power supply system of figures 1 or 2.
Figure 4 is a flow diagram of a method of operating a power supply system of a marine vessel according to an embodiment of the invention.
Figure 5 is a schematic block diagram illustrating a possible implementation of a Volts per Hertz limiter which may be used in embodiments of the power supply system.
Figure 6 is a diagram illustrating the voltage setpoint limit in dependence on AC frequency for a Volts per Hertz limiter in accordance with an embodiment of the invention.
Figure 7 is a diagram illustrating voltage overshoot after the occurrence of a 500 ms fault.
Figure 8 is a diagram illustrating voltage overshoot after a 500 ms fault when the voltage setpoint is reduced using a Volts per Hertz limiter.
Figure 9 is a diagram illustrating voltage overshoot after a 500 ms fault when the voltage setpoint is reduced by making use of a control signal of a protection controller.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense.

It should be noted that the drawings are to be regarded as being schematic representations only, and elements in the drawings are not necessarily to scale with each other. Rather, the representation of the various elements is chosen such that their function and general purpose become apparent to a person skilled in the art. It is also to be understood that the coupling of physical or functional units as shown in the drawings and described hereinafter does not necessarily need to be a direct connection of coupling, but may also be an indirect connectional or coupling, i.e. a connection or a coupling with one or more additional intervening elements, such as fuses, circuit breakers, transformers or the like. A skilled person will further appreciate that the physical or functional units illustrated and described herein with respect to the different embodiments do not necessarily need to be implemented as physically separate units. One or more physical or functional blocks or units may be implemented in a common circuit, chip, circuit element or unit, while other physical or functional blocks or units shown may be implemented in separate circuits, chips, circuit element or units.

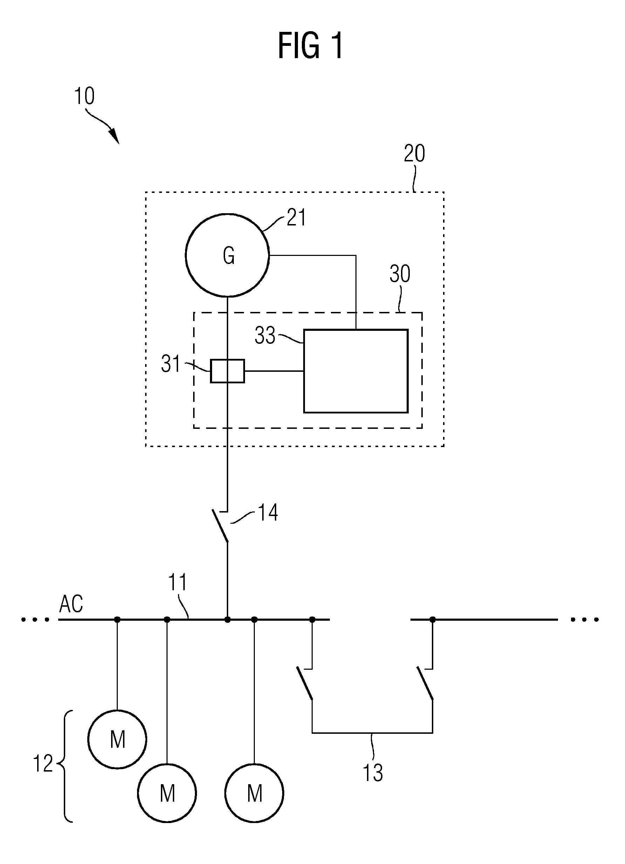

Figure 1 schematically illustrates a power system 10 of a marine vessel. The power system 10 comprises a power supply system 20 which provides electric power for operating the marine vessel. The power supply system 20 is coupled to a power distribution bus 11 of the marine vessel via a circuit breaker 14. The power distribution bus 11 comprises several sections, two of which are shown in figure 1. In operation, the different sections of the power distribution bus 11 are coupled via bus tie breakers 13. Loads that are supplied with electric power by the power distribution bus 11 comprise electric motors 12. Electric motors 12 may be part of drives, such as a drilling drive, a thruster drive or drawworks, they also comprise auxiliary electric motors for operating e.g. pumps, compressors or the like. In particular, they can comprise direct online (DOL) induction motors.

Power supply system 10 of the marine vessel is adapted to operate in several different operation modes including a DP2 (dynamic positioning 2) mode and a DP3 (dynamic positioning 3) mode. Requirements of these modes are defined by DNV (Det Norske Veritas). Meeting the DP3 requirements may result in a "DYNPOS AUTRO" classification of the marine vessel.

The DP2 mode may for example be used during transit, in which requirements regarding the tripping of consumers (i.e. disconnecting the consumers from the power system) are not that strict. The vessel may need to be operated in the DP3 mode for example during drilling operations, which require a very stable position keeping above the drilling site. Accordingly, the requirements regarding integrity of the power system are very strict for the DP3 mode of operation. In particular, to meet DP3 specifications, it is generally required to split the power distribution bus into several sections, each of which is powered by its own power supply system 20. This can be achieved by opening all the bus tie breakers 13. When a fault occurs, it will be isolated in the subsection of the power distribution bus 11 and will not affect the remaining sections, so that a safe operation of the marine vessel is achieved. 2, 3 or 4 redundant subsections can be provided, thus providing a high degree of redundancy. In the DP2 mode, integrity and reliability requirements are not that high, so that the power distribution bus 11 can be operated with bus tie breakers 13 closed.

When bus tie breakers 13 are closed and a fault occurs, e.g. due to a fault on the power distribution bus 11, a bus bar fault or a generator interconnection cable fault, the voltage on the power distribution bus 11 will drop. During the voltage drop, the motors 12 including DOL motors which may be connected through transformers to low voltage feeders, loose power and may accordingly operate under a significantly reduced current supply. They will consequently start reducing their speed, depending on the load torque curve and motor inertia. The power system 10 may comprise tens or hundreds of such small DOL motors. This makes a prediction of the overall system behavior of power system 10 difficult in case of a fault.

After the fault is cleared, e.g. by disconnecting the component causing the fault from the power system 10, or by isolating a section of the power distribution bus 11 (e.g. by opening the corresponding bus tie breakers 13), the motors 12 will increase their speed back to nominal, which results in an inrush current which can be significant.

For providing the operating voltage on the power distribution bus 11, the power supply system 20 comprises a generator 21, which is, e.g., coupled to a diesel engine or a gas turbine, and which is controlled by a control system 30 interfacing the generator 21. Control system 30 will try to bring the voltage on power distribution bus 11 back to the normal operating voltage, i.e. to 100 % of the nominal voltage. Control system 30 may for this purpose comprise an automatic voltage regulator (AVR). In conventional power supply systems of marine vessels, a fault will result in the occurrence of a voltage overshooting, which is typically higher than about 140 to 150 % of the nominal operating voltage. Since such high voltage overshoot can cause the tripping of and/or damage to other electrical components connected to the power distribution bus 11 of the marine vessel, the bus tie breakers 13 are to be opened during operation in DP3 mode, so that if such voltage overshoot occurs in one section of the power distribution bus 11, the other sections are unaffected. The tripping of essential consumers, such as navigational equipment, can thus be avoided. As an example, if a 150 % voltage overshoot occurs, a consumer operating on nominal 230 V AC may sense 350 V AC for several seconds, leading to the breaking or opening of fuses or breakers, or to damage to the equipment.

In the embodiment of figure 1, the power supply system 20 is adapted to minimize the voltage overshoot occurring after such fault to less than 125 % of the nominal operating voltage, preferably to even less than 120 % of the nominal operating voltage. For this purpose, the control system 30 comprises a measuring unit 31 which measures a parameter of the electric power generated by generator 21, e.g. the output voltage of the generator 21 or the AC frequency of the output voltage. Occurrence of a fault will result in a drop of the voltage on the output of generator 21. By measuring the parameter, the voltage drop may be sensed, or, since the generator will slow down in the attempt to bring the voltage back up to nominal, a drop of the AC frequency of the output voltage may indicate the fault.

Control system 30 comprises a control unit 33 which adjusts the output voltage of generator 21 by controlling the voltage/current of a field coil of generator 21 in accordance with a voltage setpoint. In normal operation, the voltage setpoint is set to an operating voltage setpoint, so that generator 21 provides the nominal operating voltage at its output.

Control unit 33 is now adapted to control the voltage setpoint for the output voltage of generator 21 in dependence on the parameter measured by measuring unit 31 such that if the value of the parameter falls below a threshold, thus indicating the occurrence of a fault, the voltage setpoint is reduced. Control unit 33 may detect the fault and set the voltage setpoint to a predefined lower value, or it may provide a predefined relationship between the measured parameter and the voltage setpoint, so that a drop in the parameter automatically results in a drop of the voltage setpoint.

Control unit 30 is furthermore adapted to gradually increase the voltage setpoint back to the operating voltage setpoint after the fault is electrically isolated from the power supply system. Again, the control unit 33 may increase the voltage setpoint according to a predefined procedure, or it may provide a relationship between the measured parameter and the voltage threshold, so that if the measured parameter returns back to normal, the voltage setpoint also return back to the operating voltage setpoint.

Accordingly, since the voltage setpoint is first lowered and then gradually increased back to the operating voltage setpoint, voltage overshoot can be reduced significantly. In particular, the gradual increase can be chosen such that the voltage overshoot is limited to less than 125 %, preferably less than 120 % of the nominal operating voltage. In such configuration, it is possible to operate the power system 10 with closed bus tie breakers 13 even in the DP3 mode of operation, as the power supply system 20 will prevent the voltage overshoot to exceed DP3 specifications.

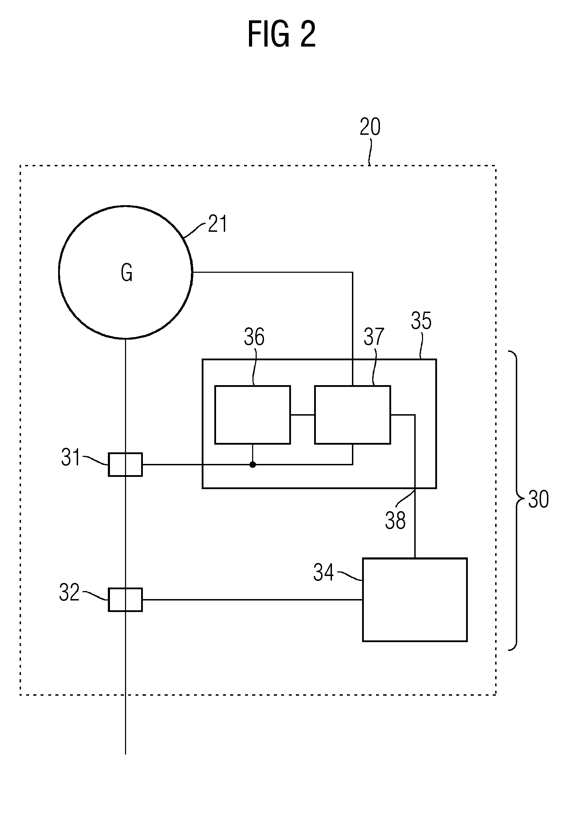

Figure 2 shows an embodiment of the power supply system 20 which may be used in the power system 10 of figure 1. The control system 30 of the power supply system 20 is implemented by means of an automatic voltage regulator (AVR) 35 and a protection controller 34. The AVR 35 may implement the functionality of any automatic voltage regulator known in the art, and its particular configuration is chosen in accordance with the type of generator 21 and the power requirements for power supply system 20. The AVR 35 interfaces the measuring unit 31, which may for example be implemented in form of a voltage and/or power sensing circuit. Measuring unit 31 may further comprise a frequency sensing circuit for measuring the AC frequency of the AC voltage generated by the generator 21. Note that the measurement unit 31 does itself not need to determine the AC voltage or the AC frequency of the output voltage. It may for example simply be used to sample over time voltage values at a measurement points on the generator output, and from a sequence of measurement values, an RMS value of the output voltage may be determined, and the frequency of the output voltage may be determined (for example by using a Fourier transform). This may be performed in the AVR 35. The output voltage of generator 21 may for example be measured at a stator winding, or maybe measured in an auxiliary winding.

The AVR 35 comprises a voltage controller 37 which uses the voltage sensed by measuring unit 31 at the output of generator 21 for voltage control purposes. In particular, voltage control unit 37 controls the voltage or power fed to the exciter field of generator 21, and thus controls the output voltage of the generator. In general operation, an operating voltage setpoint is defined in the AVR 35, and the voltage controller 37 adjusts the field voltage in such way that the voltage output of generator 21 corresponds to the operating voltage setpoint. Closed loop control of the output voltage of generator 21 can thus be achieved, and the AVR 35 can compensate for load, speed, temperature, power factor and the like of generator 21.

In the embodiment of figure 2, the AVR 35 is provided with a Volts per Hertz limiter 36. The Volts per Hertz limiter 36 limits the voltage setpoint of the AVR 35 in dependence on the AC frequency of the output voltage of generator 21. This limitation can occur according to a characteristic curve, which is defined in the Volts per Hertz limiter 36.

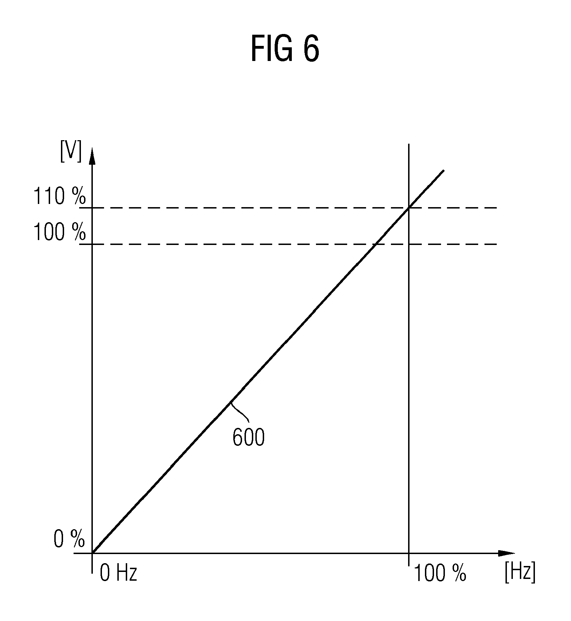

An example of such characteristic curve is illustrative in figure 6. The X-axis of the diagram of a figure 6 shows the AC frequency at the generator output in terms of Hz, whereas the Y-axis shows the output voltage of the generator. At normal operating conditions, the output voltage will have a nominal AC frequency (100 %) and the nominal output voltage value (100 %). The line 600 illustrates a fixed V/Hz ratio which limits the maximum voltage setpoint in dependence on the actual AC frequency of the output voltage (here a fixed ratio of 1.1). Accordingly, if the AC frequency drops for example to 50 %, the maximum voltage setpoint is limited to 55 %. Besides using a fixed ratio, resulting in the straight line 600 in the diagram of figure 6, a ratio may be used that changes with generator frequency, which would accordingly result in a characteristic curve in the diagram of figure 6.

The maximum Volts per Hertz ratio i.e. the line 600, effectively poses a frequency threshold to the AC frequency of the output voltage. If the AC frequency drops below this threshold, i.e. line 600 is crossed in negative X-direction, the voltage setpoint is reduced so that operation of the system continues in the region below line 600. Similarly, if the AC frequency increases, the voltage setpoint can be increased to the limit given by the Volts per Hertz ratio, i.e. the line 600.

Turning back to figure 2, the measurement unit 31 comprises a frequency measuring circuit (which may be implemented as described above), and thus provides the frequency of the output voltage to the Volts per Hertz limiter 36. The Volts per Hertz limiter 36 then provides the maximum allowable voltage set point to the voltage controller 37, which reduces its voltages setpoint in accordance with the limit and controls the field voltage accordingly.

If a fault now occurs in the power system, the current been drawn from power supply system 20 will increase, resulting in a voltage drop at the output of generator 21 and in a reduced rotational frequency of the generator 21, and accordingly in a reduced AC frequency of the output voltage. This is detected by the Volts per Hertz limiter 36, which reduces the voltage setpoint accordingly. When the fault is cleared from the system, the generator will pick up speed again, resulting in an increasing AC frequency of the output voltage and thus in a corresponding increase of the maximum allowable voltage setpoint. The voltage setpoint thus gradually increases back to the normal operating voltage setpoint, whereby voltage overshooting can be kept small.

In addition to or as an alternative for operating the Volts per Hertz limiter 36, the control system 30 of power supply system 20 may comprise a protection controller 34. Protection controller 34 interfaces an input 38 of the automatic voltage regulator 35, via which it controls the voltage setpoint of the AVR. Protection controller 34 interfaces measurement unit 32 which comprises voltage sensing circuits for sensing the output voltage of generator 21. Note that it is sufficient to provide a single measurement unit (i.e. substituting the measurement units 31 and 32), which provides measurements of the parameter indicating the fault to both the AVR 35 and the protection controller 34.

Input 38 can be an analogue input, and protection controller 34 can provide an analogue control signal for indicating a change of the voltage setpoint to the AVR 35. As an example, an analogue voltage in a range between -10 to +10 V DC, or a current, e.g. within a range of 4 to 20 mA, may be used as the control signal. Protection controller 34 monitors the measured output voltage, and if the output voltage drops below a voltage threshold, then protection controller 34 identifies the occurrence of a fault. By means of the control signal, protection controller 34 controls the voltage setpoint to a starting voltage setpoint, which may for example lie in a range between about 0 % to 50 % of the operating voltage setpoint. After clearance of the fault, protection controller 34 ramps up the voltage setpoint back to the operating voltage setpoint. The ramp may have a duration of between about 0.1 to about 3 seconds, preferably between about 0.5 to 2 seconds. This way, the inrush current to the motors 12 coupled to the power system can be reduced, while it can be prevented that other components coupled to the power system will trip due to a too low voltage, e.g. when the voltage is increased too slowly. An example is a thruster frequency converter which may disconnect since if the voltage is reduced for a too long duration, a kinetic energy recovery may not be possible anymore.

Besides using a single ramp from the starting voltage setpoint to the operating voltage setpoint, the ramping may be made more complex in order to reduce the amount of time required for returning to the operating voltage setpoint, while at the same time minimizing voltage overshoot. As an example, a first ramp may be used for ramping up the voltage setpoint to between about 75 % and 85 % of the operating voltage setpoint, and a second ramp may be used for returning the voltage setpoint from this intermediate voltage setpoint to the operating voltage setpoint. The first ramp is configured to have a slope that is steeper than the slope of the second ramp, thereby minimizing the time for recovery and at the same time reducing voltage overshoot.

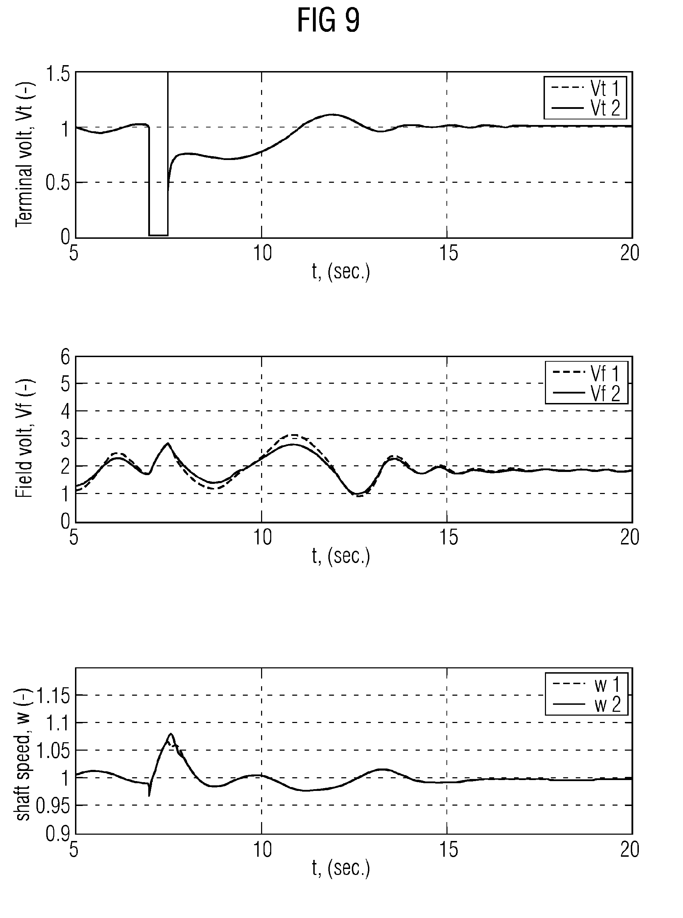

In a particular implementation, the protection controller detects the occurrence of a fault if the output voltage drops below 20%, or below 10%. After clearance of the fault, it will then start a soft ramp-up of the voltage setpoint from 10% to 100% within 2 seconds. This configuration was used for obtaining the results of Fig. 9, which are described further below. Since the duration of the fault is comparatively short (e.g. below 0.5 seconds), the ramp can be started directly after detection of the fault, resulting in the larges part of the ramp occurring after fault clearance, or it may only start after the detection of the clearance of the failure (e.g. output voltage rising again, or rising above a threshold Voltage).

In the configuration shown in figure 2, both the Volts per Hertz limiter 36 and the protection controller 34 are used at the same time. After a fault, the voltage setpoint is controlled by the protection controller 34 as described above. If the protection controller fails, the Volts per Hertz limiter 36 will still provide a limit to the voltage setpoint, so that even in such case, voltage overshoot is significantly reduced. In other embodiments, only one of the Volts per Hertz limiter 36 or the protection controller 34 may be used. Using only the Volts per Hertz limiter 36 has the advantage that only the voltage measurements/frequency measurements taken by the AVR are required, and no additional controller needs to be implemented. On the other hand, making use of the protection controller 34 has the advantage that even lower voltage overshooting can be achieved, and the ramping up of the voltage setpoint can be optimized so as to achieve fast recovery and minimal voltage overshoot. Using both at the same time has the advantage that redundancy is provided, keeping the system operable even if one of both should fail.

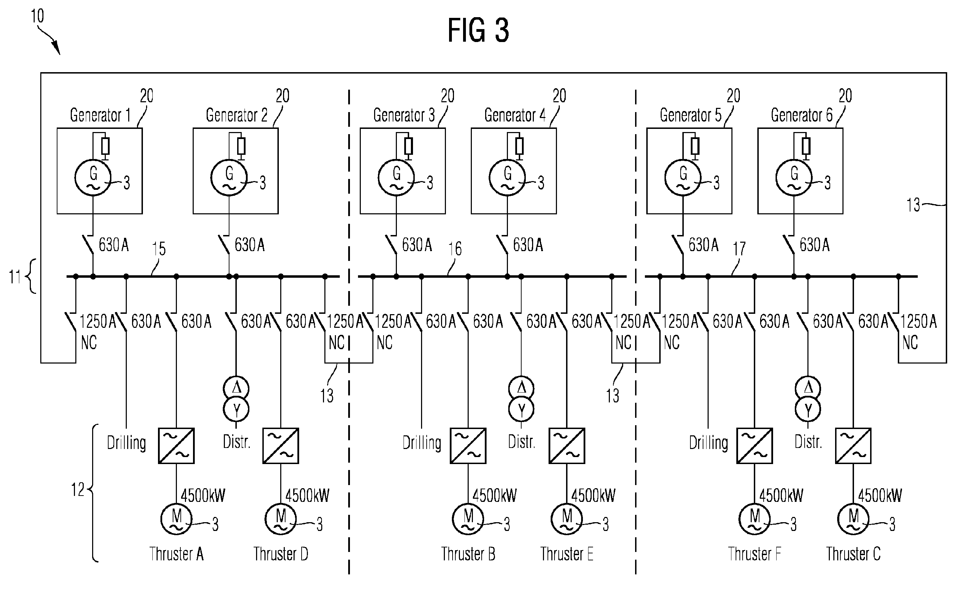

In figure 3, a particular implementation of the power system 10 is schematically illustrated. The power system 10 of figure 3 may implement any of the configurations of the power supply system 20 as outlined above. Accordingly, any of the explanations given above equally apply to the power system 10 of figure 3. The power supply systems 20 are coupled to the power distribution bus 11 via circuit breakers, so that the power supply systems 20 can be electrically isolated from the power distribution bus 11 in case of a fault in the respective power supply system. The power distribution bus 11 comprises three sections 15, 16, 17, to each of which two power supply systems 20 are coupled. The sections are interconnected via bus tie breakers 13. Power distribution bus 11 thus has a ring configuration. Furthermore, loads/consumers including the electric motors 12 are coupled to the power distribution bus 11 via circuit breakers, so that they can be electrically isolated from the power distribution bus 11 in case of a fault.

As indicated by the dashed lines, the generators coupled to each section of the power distribution bus are operating in their own individual engine rooms, segregated by a firewall and water tight separation from the other engine rooms. If there is a fault in one section of the power distribution bus, e.g. on the main power system bus bars or bus tie cables, the whole section of the power distribution bus 11 can be decoupled from the remaining sections, thereby electrically isolating the fault of the remaining sections of power distribution bus 11. By using the power supply systems 20 configured in accordance with embodiments of the invention, the bus tie breakers 13 can be closed during DP3 operation, since after the occurrence of a fault, voltage overshoot occurring when the power system resumes normal operation are minimized.

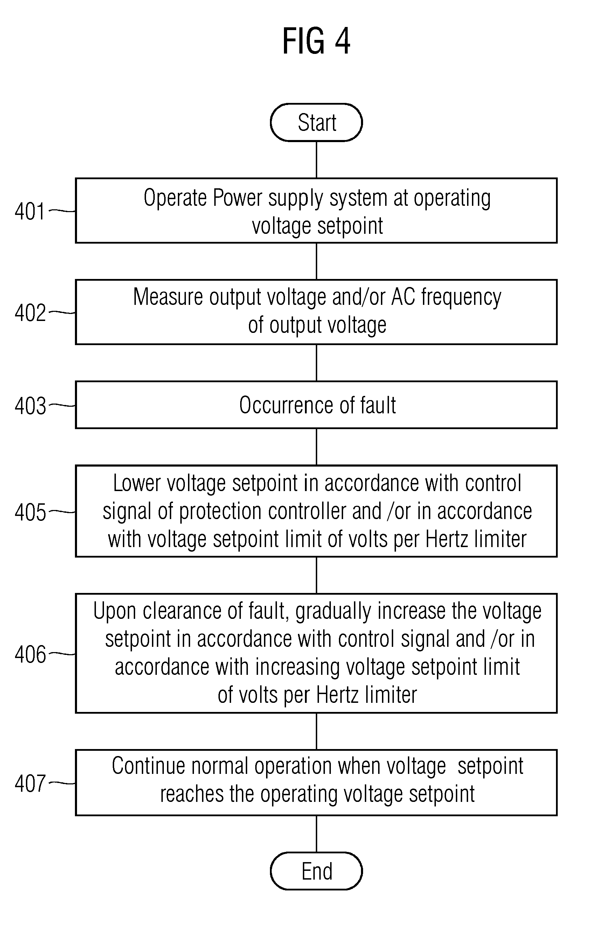

The method illustrated in the flow diagram of figure 4 may be performed on any of the above described power supply systems or power systems. In a first step 401, the power supply system 20 is operated at the operating voltage setpoint. In step 402, the output voltage and/or the AC frequency of the output voltage is measured, e.g. as mentioned above by a voltage and frequency measuring circuitry, by sampling the voltage at points in time and analyzing the sampled signal or the like. In step 403, a fault occurs in the power system. As explained above, this will be recognized as a drop in the monitored parameter, i.e. a drop in voltage or frequency at the output of the generator. In step 405, the voltage setpoint of the control system is lowered, i.e. in accordance with the control signal of the protection controller or in accordance with a voltage setpoint limit of the Volts per Hertz limiter. As mentioned above, both types of overshoot protection may be operated simultaneously, one serving as a backup for the other.

After the clearance of the fault, the voltage setpoint is gradually increased either in accordance with the control signal from the protection controller or in accordance with an increasing voltage setpoint limit of the Volts per Hertz limiter (step 406). When the voltage setpoint reaches the operating voltage setpoint at which the power supply system 20 operates under normal conditions, normal operation is resumed (step 407). This means that the voltage setpoint is no longer limited by the Volts per Hertz limiter or the protection controller, but is controlled in accordance with operating conditions by the AVR.

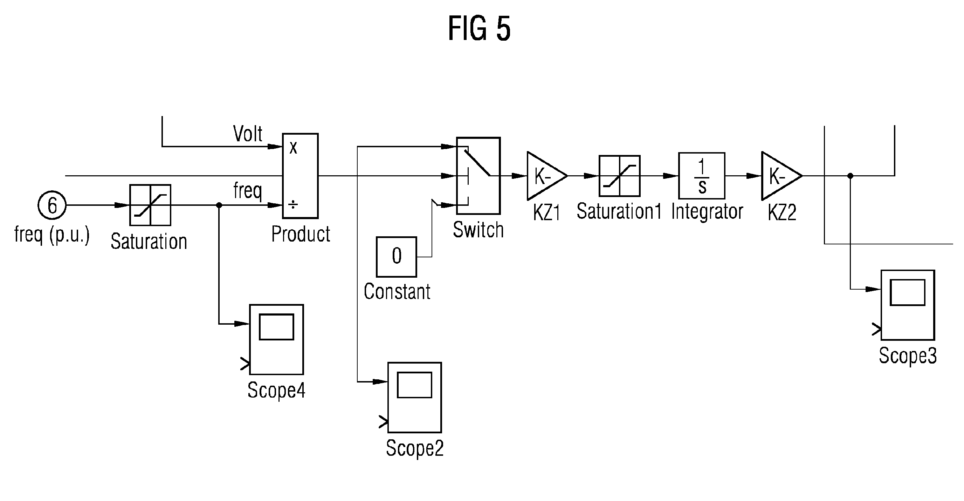

Figure 5 is a block diagram schematically illustrating the implementation of a Volts per Hertz limiter. Note that this is only a schematic drawing and that this implementation is used for simulating the output of a Volts per Hertz limiter. It may but does not need to reflect the actual setup of the Volts per Hertz limiter 36.

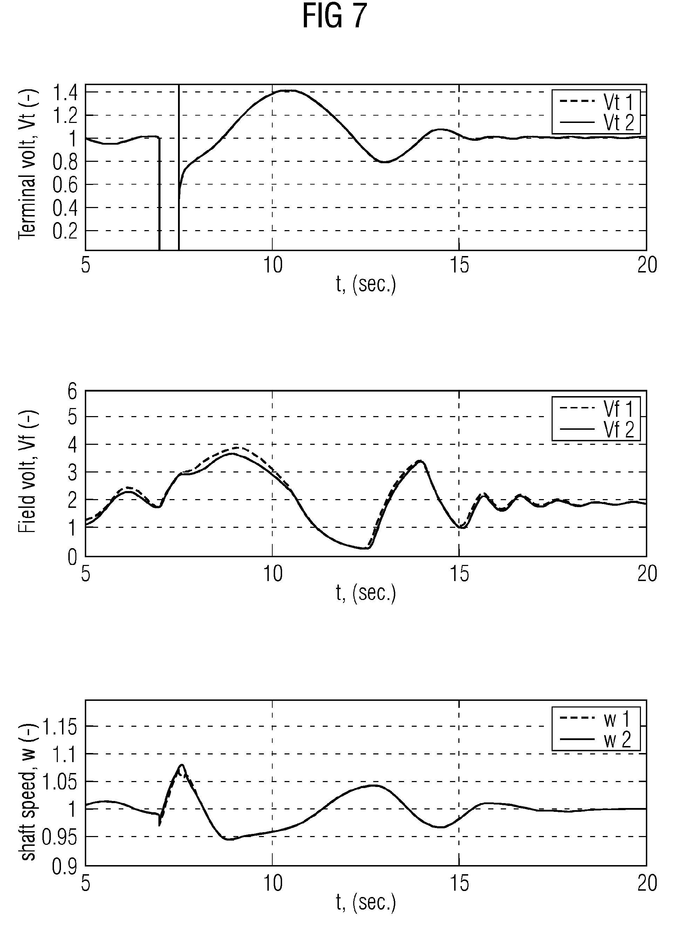

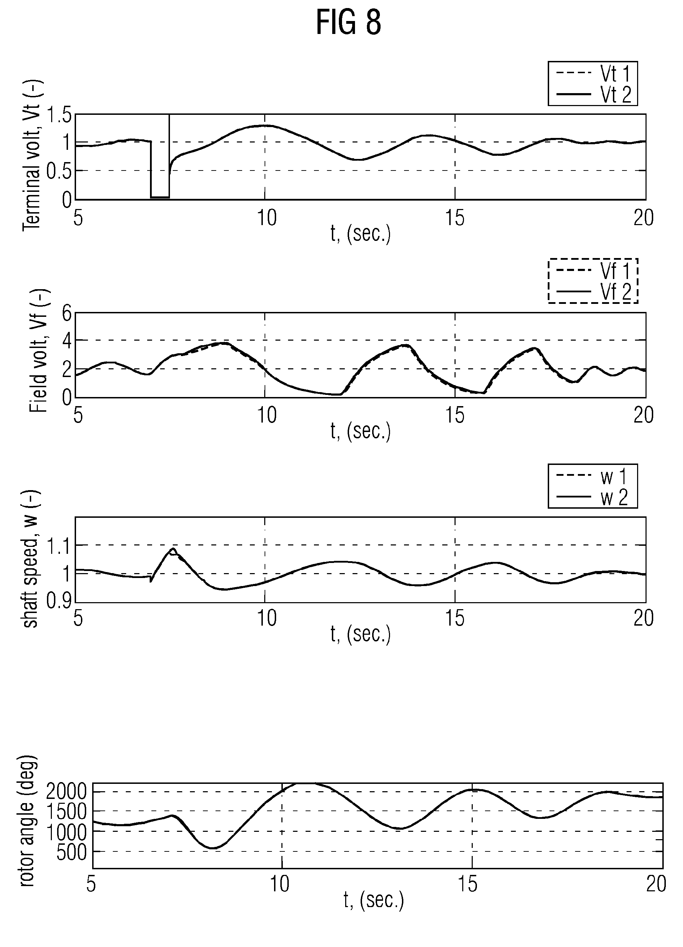

Figures 7 to 9 comprise diagrams which show the result of a simulation of the reaction of power supply system 20 in different configurations to the occurrence of a fault in the power system. The simulations where obtained by using Matlab® Simulink®. The simulations of the Volts per Hertz limiter configuration of Fig. 8 were obtained using a configuration similar to the one shown in figure 5.

In figure 7, the reaction to a fault (short circuit) of a duration of 500 ms is shown for a system that does not use the any voltage setpoint limitation. As can be seen, at the occurrence of the fault, the terminal voltage at the generator output drops significantly. After removal of the fault after 500 ms, the voltage starts to increase again (upper diagram). The voltage is controlled by an AVR without Volts per Hertz limiter and without protection controller. The terminal voltage is the voltage measured at the output of the generator. The diagram in the middle illustrates the field voltage, which is the parameter controlled by the AVR and which is a measure of the power fed to the exciter field of the generator. As can be seen, after the occurrence of the fault, the AVR tries to bring the terminal voltage back up to nominal, thereby increasing the field voltage. This leads to a considerable overshoot (see upper diagram), more than 140 % of the operating voltage in the present case. The lower diagram illustrates the shaft speed of the generator, which drops after the occurrence of the fault, but, as the field voltage is increased, increases to values about its nominal operating speed.

In the diagram of figure 8, a Volts per Hertz limiter is implemented and operating in the AVR, similar to the configuration of figure 2. The diagram second from above shows that after the 500 ms fault, the field voltage is increased slower than in figure 7, since the Volts per Hertz limiter limits the voltage setpoint. Consequently, the overshoot is reduced, as can be seen in the upper diagram, the overshoot being less than 130 % of the nominal operating voltage.

Similar to figures 7 and 8, figure 9 shows the response of the power supply system to a fault of 500 ms duration. In figure 9, the control system implements a protection controller which slowly ramps up the voltage setpoint after the occurrence and clearance of the fault. As can be seen from the field voltage diagram, the field voltage is not as excessively increased as it is the case for the system configuration of figure 7. Rather, the field voltage decreases and slowly increases after the occurrence of the fault. Consequently, the voltage overshoot is minimized. It is less than 120 % of the nominal operating voltage in the present case. In summary, by configuring the control system to gradually increase the voltage setpoint after the occurrence of a fault, voltage overshooting can be reduced, providing enhancements to voltage stability on marine vessels. Implementing both a Volts per Hertz limiter and a protection controller provides redundancy in case of a black out of one of the systems. The enhanced voltage stability reduces the risk of vessel blackout and position loss. Since voltage transients are reduced after a fault, components coupled to the power system may further benefit from an extended lifetime.

While specific embodiments are disclosed herein, various changes and modifications can be made without departing from the scope of the invention. The present embodiments are to be considered in all respects as illustrative and non restrictive, and all changes coming within the meaning and equivalency range of the appended claims are intended to be embraced therein.

## Claims

1. A power supply system of a marine vessel, the power supply system (20) being adapted to be coupled to a power distribution bus (11) of the marine vessel for powering a plurality of electric motors (12) coupled to the power distribution bus, wherein the power supply system comprises:
- a generator (21) for generating electric power, the generator providing, in operation, an output voltage at an output of the generator, the output voltage being an AC voltage;
- a control system (30) coupled to the generator and adapted to control the output voltage of the generator (21) in accordance with a voltage setpoint, which, in operation, is set to an operating voltage setpoint;
wherein the control system comprises
- a measuring unit (31) adapted to measure a parameter of the electric power generated by the generator (21), wherein the parameter is capable of indicating a fault in a component coupled to the power supply system which results in a drop of voltage on the generator output; and
- a control unit (33) adapted to control the voltage setpoint for the output voltage of the generator (21) in dependence on the measured parameter such that if the value of the parameter falls below a threshold, the voltage setpoint is reduced,
wherein the control unit (33) is further adapted to gradually increase the voltage setpoint back to the operating voltage setpoint after the fault is electrically isolated from the power supply system.

2. The power supply system according to claim 1, wherein the parameter is the voltage at the generator output and wherein the control unit (33) is adapted to determine that a fault in the power supply system or in components coupled thereto exists if the voltage at the generator output drops below a voltage threshold.

3. The power supply system according to claim 1, wherein the parameter is the AC frequency of the output voltage at the generator output and wherein the control unit (33) is adapted to determine that a fault in the power supply system or in components coupled thereto exists if the AC frequency at the generator output drops below a frequency threshold.

4. The power supply system according to any of the preceding claims, wherein the control unit (33) is adapted to set the voltage setpoint to a starting voltage setpoint after the detection of the fault and to ramp the voltage setpoint up to the operating voltage setpoint thereafter.

5. The power supply system according to claim 4, wherein the ramping of the voltage setpoint from the starting voltage setpoint to the operating voltage setpoint occurs within a time period selected from a range of about 0.1 seconds to about 3 seconds, preferably from a range of about 0.5 second to about 2 seconds.

6. The power supply system according to any of the preceding claims, wherein the control unit (33) comprises a protection controller (34) and an automatic voltage regulator (35), wherein the protection controller (34) has an interface (38) to the automatic voltage regulator (35) and is adapted to generate a control signal for controlling the voltage setpoint and to supply the control signal to the automatic voltage regulator (35) via the interface (38), and wherein the automatic voltage regulator (35) is adapted to determine the voltage setpoint from the supplied control signal and to control a field voltage of the generator (21) in accordance with the determined voltage setpoint.

7. The power supply system according to any of the preceding claims, wherein the control unit (33) comprises an automatic voltage regulator (35), the automatic voltage regulator (35) comprising a volts per Hertz limiter (36) which limits the voltage setpoint in dependence on the AC frequency of the output voltage of the generator such that a lower AC frequency results in a lower limit for the voltage setpoint.

8. The power supply system according to claims 6 and 7, wherein the automatic voltage regulator (35) is coupled to the protection controller (34) and comprises the volts per Hertz limiter (36), the automatic voltage regulator (35) being adapted to control the voltage setpoint in accordance with the supplied control signal and at the same time to limit the voltage setpoint in dependence on the AC frequency of the output voltage of the generator by means of the volts per Hertz limiter.

9. The power supply system according to claim 7 or 8, wherein at the nominal AC frequency, the voltage setpoint is limited to between 105% and 120%, preferably about 110%, of the operating voltage setpoint, which defines a maximum ratio of the voltage setpoint to the AC frequency, wherein the volts per Hertz limiter (36) is configured to limit the voltage setpoint such that the maximum ratio is not exceeded for all AC frequencies.

10. A power system of a marine vessel, in particular of an offshore platform or a drilling or production vessel, comprising:
- plural power supply systems (20) according to any of the preceding claims,
- a power distribution bus (11) divided into several sections (15, 16, 17), each section being coupled to at least one power supply system (20), wherein the sections (15, 16, 17) are connectable by bus tie breakers (13), the power distribution bus (11) being adapted to supply electric power generated by the power supply systems (20) to a plurality of electric motors (12) coupled to the power distribution bus (11).

11. The power system according to claim 10, wherein each of the power supply systems (20) is adapted to limit a voltage overshoot occurring after a fault in one of the power supply systems, the distribution bus or components coupled thereto to less than 125%, preferably less than 120%, of the nominal operating voltage of the respective power supply system (20) by said gradual increase of the voltage setpoint after isolation of the fault.

12. The power system according to claim 10 or 11, wherein the power system (10) is adapted to open, after the detection of the fault, the bus tie breakers (13) of the section (15, 16, 17) of the power distribution bus (11) in which the fault occurred, thereby isolating the fault from the power supply systems (20) coupled to the remaining sections of the power distribution bus (11).

13. The power system according to any of claims 10-12, wherein the sections (15, 16, 17) of the power distribution bus (11) are connected in a ring configuration.

14. The power system according to any of claims 10-14, wherein the power system (10) is adapted to operate according to DP3 specifications with the bus tie breakers (13) closed between the sections (15, 16, 17) of the power distribution bus (11).

15. A method of operating a power supply system (20) of a marine vessel, the power supply system (20) being coupled to a power distribution bus (11) of the marine vessel for powering a plurality of electric motors (12) coupled to the power distribution bus, the power supply system (20) comprising a generator (21) and a control system (30) adapted to control the output voltage of the generator in accordance with a voltage setpoint, the method comprising the steps of
- operating the power supply system (20) with the voltage setpoint set to an operating voltage setpoint;
- measuring a parameter of the electric power generated by the generator (21), wherein the parameter is capable of indicating a fault in a component coupled to the power supply system (20) which results in a drop of voltage on the generator output; and
- if the value of the parameter falls below a threshold, reducing the voltage setpoint for the output voltage of the generator (21) and, after the fault is electrically isolated from the power supply system (20), gradually increasing the voltage setpoint back to the operating voltage setpoint.
